# EUROPEAN PATENT SPECIFICATION

(11) **EP 1 925 393 B1**
(45) Date of publication and mention of the grant of the patent: **02.09.2009**
(21) Application number: 07405303.4
(22) Date of filing: 10.10.2007
(51) Int. Cl.: B23K 37/047, B23K 26/38

(54) **Thre-dimensional processing apparatus of long size work**
Dreidimensionales Verarbeitungsgerät für langgestreckte Arbeiten
Appareil de traitement tridimensionnel de travail de grande dimension

(30) Priority: 27.11.2006 JP 2006318009
(43) Date of publication of application: 28.05.2008
(73) Proprietor: Yamazaki Mazak Corporation, Niwa-gun Aichi, pref. (JP)
(72) Inventor: Yamazaki, Tsunehiko, Oguchi-cho, Niwa-gun Aichi Pref. (JP); Miyakawa, Naoomi, Oguchi-cho, Niwa-gun Aichi Pref. (JP)
(74) Representative: Moinas, Michel

(56) References cited:
- EP-A- 0 705 655
- EP-A- 1 068 925

## Description

### BACKGROUND OF THE INVENTION

### Field of the invention

The present invention relates to a three-dimensional processing apparatus capable of subjecting so-called long size members such as pipes or angle members to linear cutting processes for forming free curved surface shapes via laser cutting processes and the like, see for example EP-A-1 068 925.

### Description of the related art

Recently, linear processing apparatuses capable of subjecting long size works to cutting processes have been proposed. Japanese Patent Nos. 3769663, 3710116 and 3796079 are related to patents of three-dimensional laser processing apparatuses for long size members owned by the present applicant.

According to the three-dimensional laser processing apparatusesdisclosed above,free curvedsurfacescan be processed using laser to long size members such as pipes and angle members, but mechanical processes such as processing of tapped holes and the like cannot be performed.

### SUMMARY OF THE INVENTION

The object of the present invention is to provide a three-dimensional processing apparatus capable of subjecting long size members to free curve laser cutting processes continuously, and also subjecting the same to tap processes for forming tapped holes.

In order to achieve the above objects, the present invention provides a three-dimensional processing apparatus of a long size work, comprising a long size base having a length corresponding to the length of a long size work to be processed; a processing unit disposed substantially at a longitudinal center portion of the base; a front work feeder disposed to face one side of the base with respect to the processing unit; a rear work feeder disposed to face the other side of the base with respect to the processing unit; and a plurality of chuck devices for gripping the work and sending the same along axis X or a first axis to the processing unit.

Further, the processing unit of the present invention comprises a column and a saddle guided on the column along axis Y which is a second axis orthogonal to axis X, and a processing head guided with respect to the column along axis Z which is a third axis perpendicular to a plane formed by axis X and axis Y; and the processing head comprises a laser processing unit and a tap unit.

Furthermore, the tap unit of the present invention comprises a turret mechanism, a plurality of drivers allocated by the turret mechanism, and tap tools supported by the drivers, and also includes a mechanism to send the allocated driver in the direction of axis Z.

Further, the present apparatus characterizes in that after the laser processing unit processes a tap pilot hole, the tap pilot hole is subsequently subjected to tap processing via the tap unit.

According to the three-dimensional processing apparatus of the present invention, long size works such as pipes can be subjected to three-dimensional laser processing, and the chucked work can be continuously subjected to tap processing. Thus, the present invention enables to cut down the number of steps for performing tap processing in a post-process.

Furthermore, the tap pilot holes can be processed via laser processing simultaneously as performing the three-dimensional processing, so the overall processing time can be cut down significantly.

### BRIEF DESCRIPTION OF THE DRAWINGS

FIG. 1 is a perspective view showing the three-dimensional laser processing apparatus to which the present invention is applied from a front side;
FIG. 2 is a perspective view showing the three-dimensional laser processing apparatus to which the present invention is applied from a rear side;
FIG. 3 is a perspective view showing the outline of the processing unit;
FIG. 4 is an explanatory view of the processing unit;
FIG. 5A is a front view of a laser processing unit and a tap unit, and FIG. 5B is a right side view thereof;
FIG. 6 is a perspective view showing the case in which the present invention is applied to a long size cylindrical pipe;
FIG. 7 is a perspective view of the relevant portion of FIG. 6;
FIG. 8 is a perspective view showing the case in which the present invention is applied to a long size square pipe;
FIG. 9 is a perspective view of the relevant portion of FIG. 8;
FIG. 10 is a perspective view showing the case in which the present invention is applied to a long size channel member; and
FIG. 11 is a perspective view of the relevant portion of FIG. 10.

### DETAILED DESCRIPTION OF THE PREFERRED EMBODIMENTS

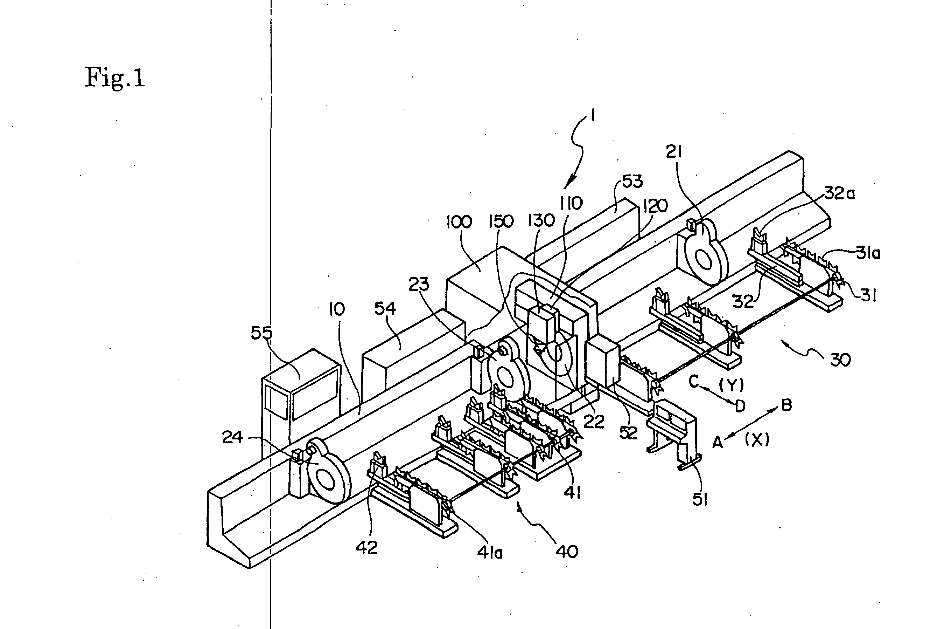

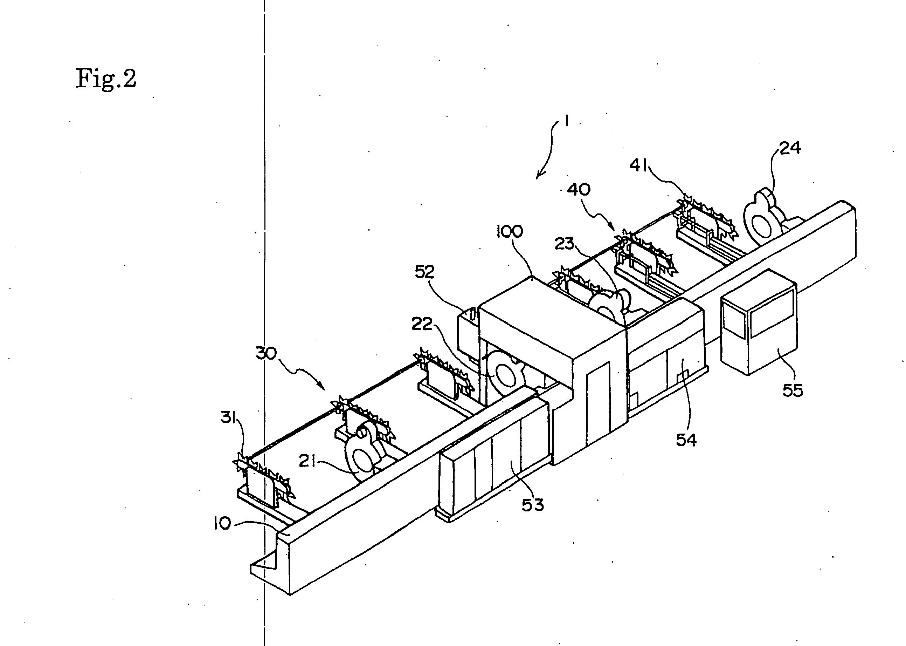

FIG. 1 is a perspective view showing the three-dimensional laser processing apparatus to which the present invention is applied from the front side, FIG. 2 is a perspective view showing the same from the rear side.

The three-dimensional laser processing apparatus denoted as a whole by reference number 1 has a base 10. On the base 10 is disposed a guiding device not shown, and four chuck devices 21, 22, 23 and 24 are disposed so as to move independently along an X-axis illustrated by arrow A-B.

A processing unit 100 is disposed at the center of the base 10, and on either side of the processing unit 100 are disposed a front work feeder 30 and a rear work feeder 40.

The front work feeder 30 has a plurality of chain feeders 31 each having a work support 31a, and conveyor devices 32 provided to each chain feeder 31. The conveyor device 32 has a work support 32a for supplying the work sent out via the chain feeder 31 to the chuck device.

The rear work feeder 40 has a similar structure for receiving the processed work from the chuck device and transferring it to the exterior of the device.

The three-dimensional laser processing apparatus is equipped with necessary equipments such as a control unit 51, an NC device 52, an electric panel 53, a laser oscillator 54 and a chiller unit 55.

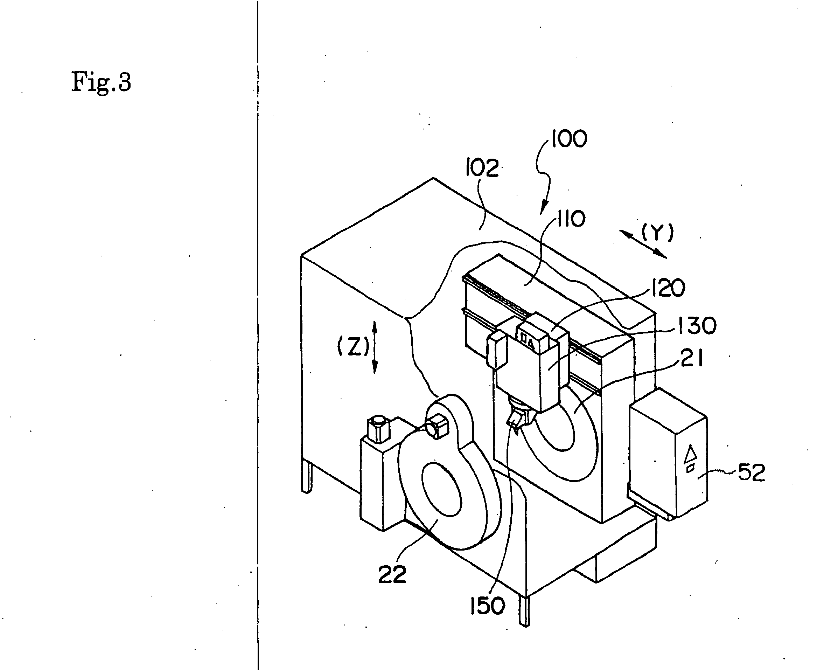

FIG. 3 is a perspective view showing the outline of the processing unit 100.

The processing unit 100 has a column 110 protected by an appropriate cover 102 or the like, and comprises a saddle 120 that is guided along the column 110 in the direction of axis Y. A processing head 130 is supported on the saddle 120, which is guided in the Z-axis direction. A laser processing unit 150 is disposed on the processing head 130. The laser processing unit 150 comprises a laser torch capable of being rotated around two orthogonal axis lines for subjecting a work to three-dimensional laser processing.

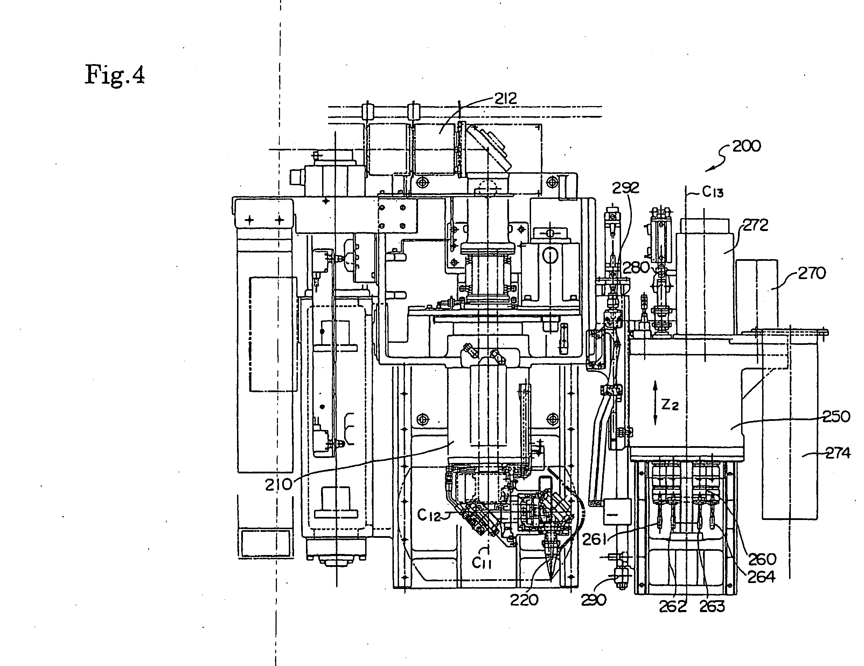

FIG. 4 is an explanatory view showing the structure of a processing unit 200 according to the present invention attached to the processing head 130.

The processing unit 200 comprises a laser processing unit 210 and a tap unit 250.

The laser processing unit 210 has a torch 220 for focusing and irradiating laser beams transmitted through a light guide 212 from a laser oscillator. The torch 220 is rotated around a vertical axis C₁₁ and also rotated around a horizontal axis C₁₂.

The tap unit 250 has a turret mechanism, and includes a plurality of drivers 260 supported by the turret mechanism. In the present embodiments, the tap unit includes six drivers 260 that are respectively equipped with tap tools 261, 262, 263, 264 and so on of various sizes. The six tap tools being prepared can have nominal diameters of M3, M4, M5, M6, M8 and M10, for example.

The six drivers 260 are rotated around axis C₁₃ via a servomotor 270 and allocated. The allocated driver 260 moves up and down in the direction of axis Z₂ via a driving mechanism 280.

The servomotor 272 drives the driver 260 and subjects a work having a pilot hole formed thereto via laser processing to tap processing. The tap paste required for the tap processing is applied to the tap tool via a tap paste supplying device 290. The tap paste supplying device 290 is operated via an actuator 292. The tap unit 250 is electrically connected to the side having the processing head via a cable 274.

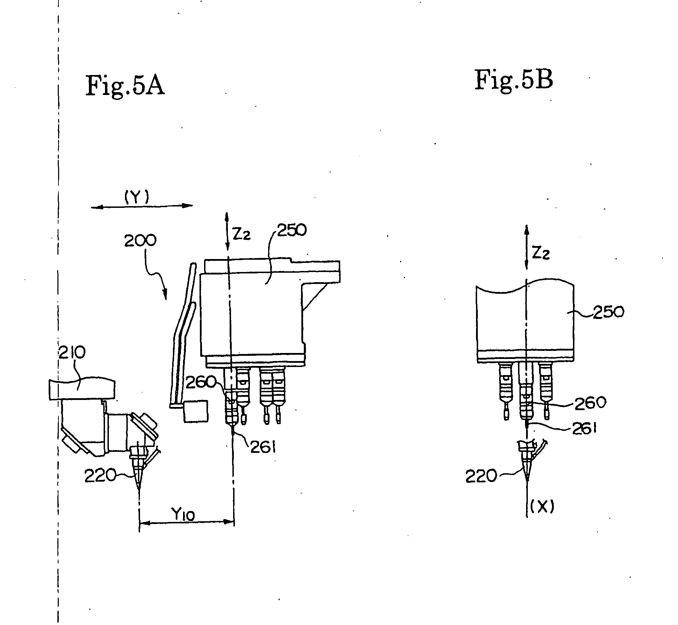

FIG. 5A is a front view of the laser processing unit 210 and the tap unit 250, and FIG. 5B is a right side view thereof.

The processing unit 200 is supported by a saddle 120 and moves in the direction of axis Y on the column 110.

A coordinate distance Y₁₀ on the Y axis when the center line of the torch 220 for laser-processing a pilot hole of the tap on the work corresponds with the selected tap tool on the X axis is recognized by the NC device.

Therefore, after the torch 220 processes a tap pilot hole to the given position on a work, the processing unit 200 is moved for distance Y₁₀ on the Y axis, so that the driver 260 equipped with the selected tap tool 261 is lowered toward axis Z₂ to subject the processed pilot hole to tap processing.

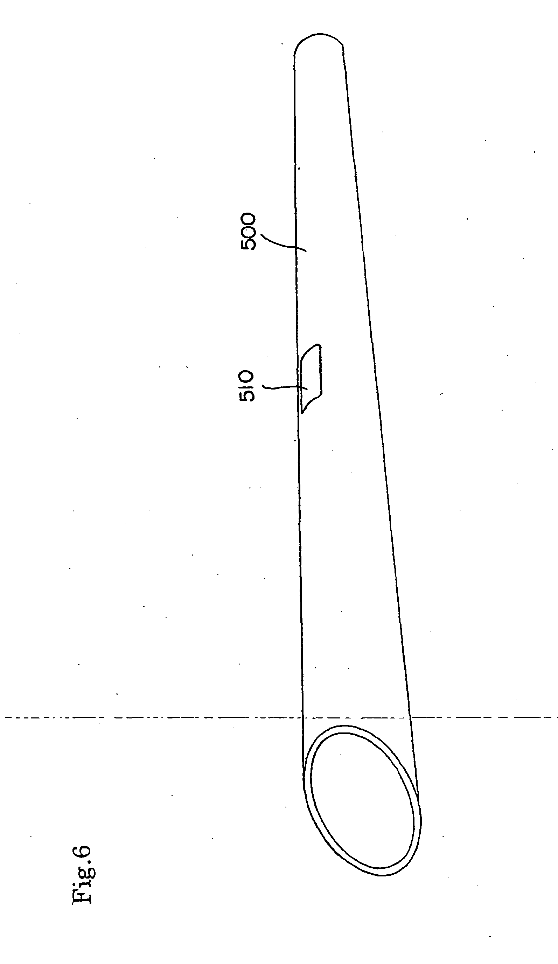

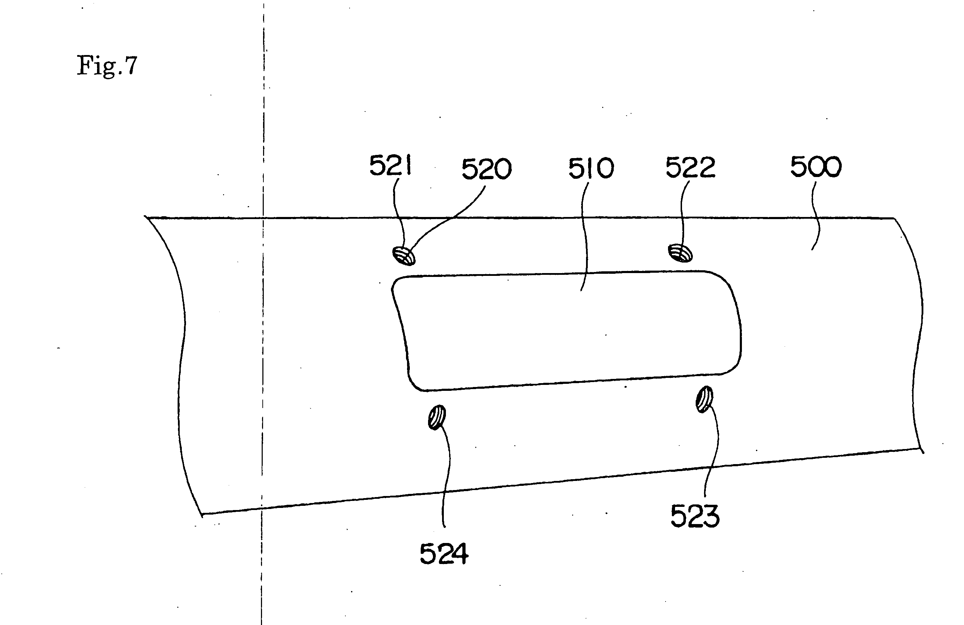

FIG. 6 is a perspective view showing the case in which the present invention is applied to a long size cylindrical pipe, and FIG. 7 is a perspective view of the relevant portion.

A long size cylindrical pipe denoted as a whole by reference number 500 is sent in through a front work feeder, chucked, and subjected to processing by a laser processing unit 210 of the processing unit 200 by which an opening 510 having a three-dimensional shape is processed thereto. FIG. 7 shows the case in which four tap holes are processed around the opening 510 formed to the long size cylindrical pipe 500.

After processing tap pilot holes 520 on the pipe via the laser processing unit 210, tap holes 521 are processed thereon via the tap unit 250 according to the procedure described above. Other tap holes 522, 523 and 524 are processed via a similar procedure.

Further, each tap hole is processed only in the perpendicular direction with respect to the surface of the work 500.

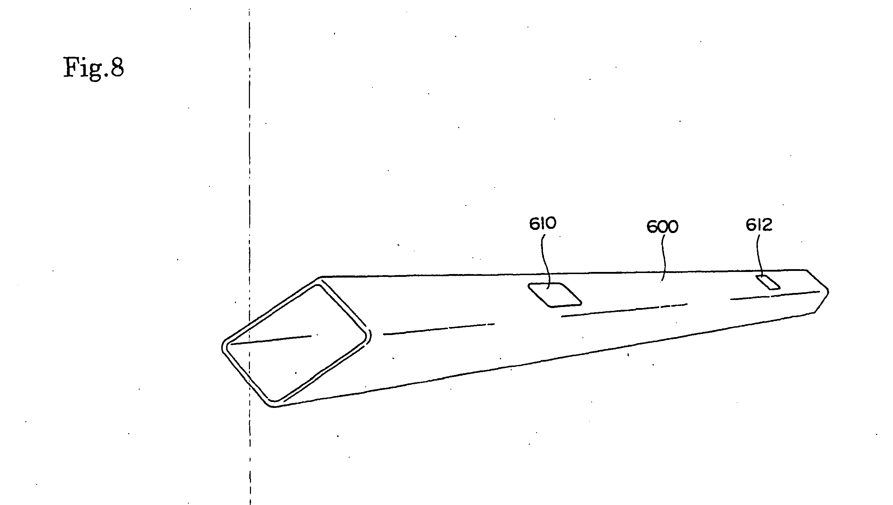

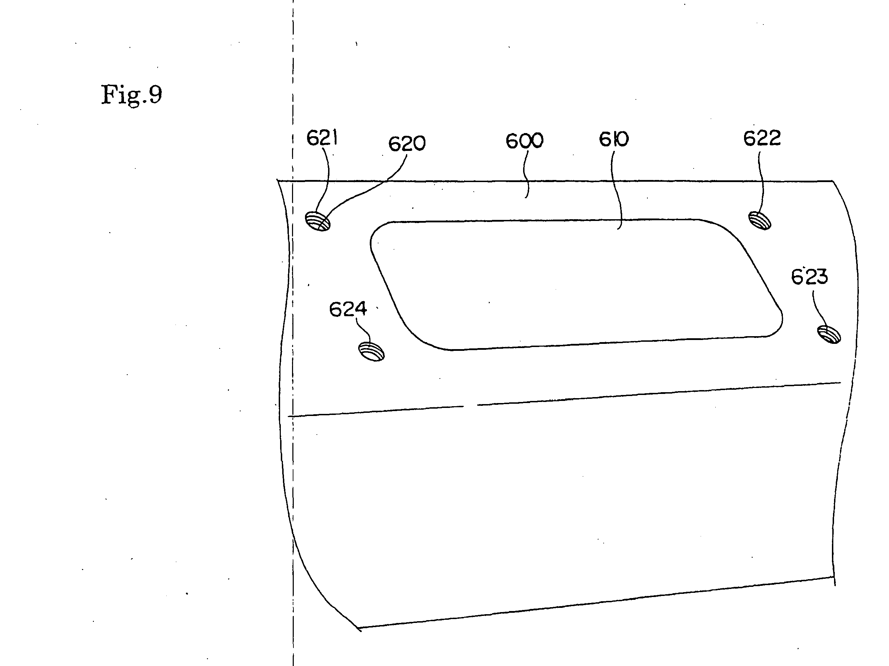

FIG. 8 is a perspective view showing the case in which the present invention is applied to a long size square pipe 600, and FIG. 9 is a perspective view of the relevant portion.

The long size square pipe denoted as a whole by reference number 600 is subjected to processing via the laser processing unit 210 of the processing unit 200, by which openings 610 and 612 are formed.

FIG. 9 shows the case in which four tap holes are processed on the circumference of the opening 610.

After processing tap pilot holes 520 on the square pipe via the laser processing unit 210, tap holes 621 are processed thereon via the tap unit 250 according to the procedure described above. The other tap holes 622, 623 and 624 are processed via a similar procedure.

Further, each tap hole is processed only in the perpendicular direction with respect to the surface of the work 600.

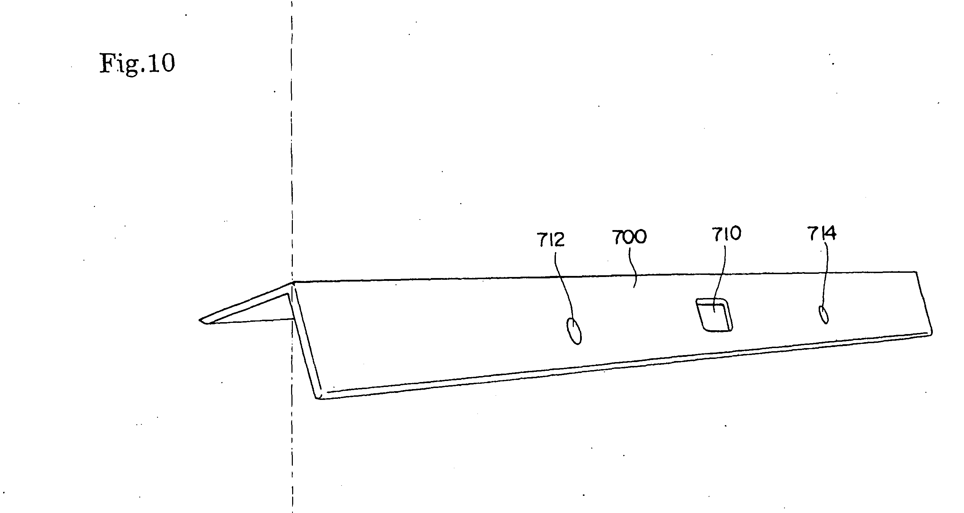

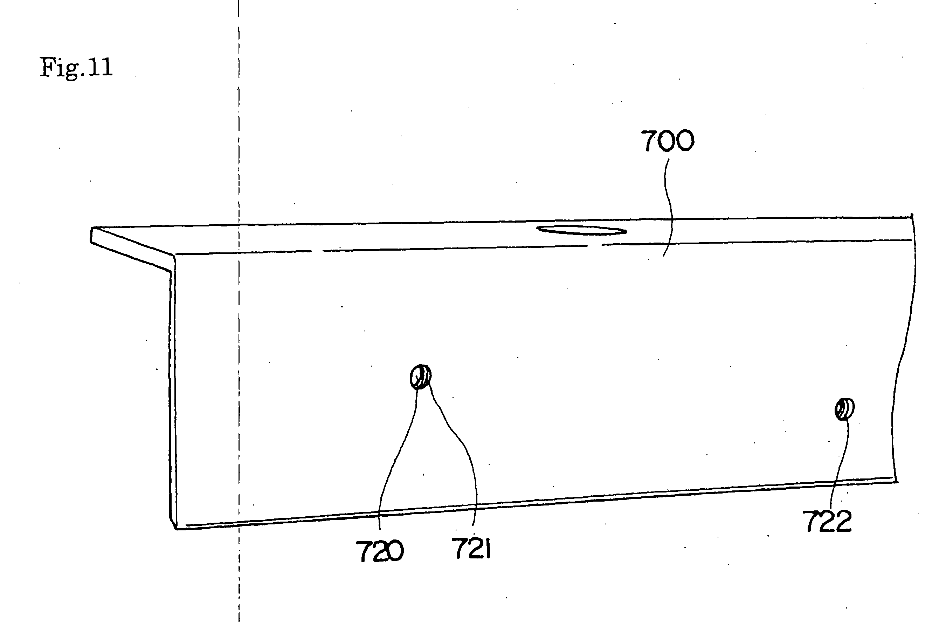

FIG. 10 is a perspective view showing the case in which the present invention is applied to a long size channel member 700, and FIG. 11 is a perspective view of the relevant portion.

The long size channel member denoted as a whole by reference number 700 has processed portions 710, 712 and 714 formed thereto via the laser processing unit 210 of the processing unit 200.

FIG. 11 illustrates a case in which two tap holes are processed on the channel member 700.

After processing tap pilot holes 720 via the laser unit, tap holes 721 are processed on the channel member via a tap unit 250 according to the procedure described above. Other tap holes 722 are processed via a similar procedure.

The tap holes are processed only in the perpendicular direction with respect to the surface of the work 700.

## Claims

1. A three-dimensional processing apparatus (1) of a long size work, comprising:
a long size base (10) having a length corresponding to the length of a long size work to be processed;
a processing unit (200) disposed substantially at a longitudinal center portion of the base (10);
a front work feeder (30) disposed to face one side of the base (10) with respect to the processing unit (200);
a rear work feeder (40) disposed to face the other side of the base (10) with respect to the processing unit (200); and
a plurality of chuck devices (21, 22, 23, 24) for gripping the work and sending the same along axis X which is a first axis to the processing unit (200),
**characterized in that** the processing unit (200) comprises a column (110) and a saddle (120) guided on the column along axis Y which is a second axis orthogonal to axis X, and a processing head (130) guided with respect to the column along axis Z which is a third axis perpendicular to a plane formed by axis X and axis Y; and
the processing head (130) comprises a laser processing unit (210) and a tap unit (250).

2. A three-dimensional processing apparatus (1) of a long size work according to claim 1, wherein the tap unit (250) comprises a turret mechanism, a plurality of drivers (260) allocated by the turret mechanism, and tap tools (261, 262, 263, 264) supported by the drivers (260).

3. The three-dimensional processing apparatus (1) of a long size work according to claim 2, wherein the tap unit (250) has a mechanism (280) to send the allocated driver (260) in the direction of axis Z.

4. The three-dimensional processing apparatus (1) of a long size work according to claim 1 or claim 2, wherein after the laser processing unit (210) processes a tap pilot hole (520), the tap unit (250) subsequently provides a tap processing to the tap pilot hole (520).

## Patentansprüche

1. Dreidimensionale Bearbeitungseinrichtung (1) für ein in Längsrichtung groß dimensioniertes Werkstück mit einem in Längsrichtung groß dimensionierten Grundteil (10), das eine Länge aufweist, die der Länge des zu bearbeitenden, in der Längsrichtung groß dimensionierten Werkstückes entspricht, mit einer Bearbeitungseinheit (200), die im Wesentlichen an einem sich in Längsrichtung erstreckenden Mittenabschnittes des Grundteiles (10) angeordnet ist, mit einer vorderseitigen Werkstückzuführeinheit (30), die in Bezug auf die Bearbeitungseinheit (200) gegenüber einer Seite des Grundteiles (10) angeordnet ist, mit einer rückseitigen Werkstückzuführeinheit (40), die in Bezug auf die Bearbeitungseinheit (200) der anderen Seite des Grundteiles (10) gegenüber liegend angeordnet ist, und mit einer Anzahl von Spannvorrichtungen (21, 22, 23, 24) zum Greifen des Werkstückes und zum Weiterleiten desselben entlang der X-Achse, die eine erste Achse der Bearbeitungseinheit (200) ist, **dadurch gekennzeichnet, dass** die Bearbeitungseinheit (200) eine Säule (110) und einen Schlitten (120) aufweist, der an der Säule entlang einer Y-Achse geführt ist, die eine zweite, zu der X-Achse rechtwinklige Achse ist, und über einen Bearbeitungskopf (130) verfügt, der in Bezug auf die Säule entlang einer Z-Achse geführt ist, die eine dritte, zu der durch die X-Achse und die Y-Achse gebildeten Ebene rechtwinklige Achse ist, und dass der Bearbeitungskopf (130) über eine Laserbearbeitungseinheit (210) und über eine Gewindebearbeitungseinheit (250) verfügt.

2. Dreidimensionale Bearbeitungseinrichtung (1) für ein in Längsrichtung groß dimensioniertes Werkstück gemäß Anspruch 1, bei der die Gewindebearbeitungseinheit (250) einen Revolvermechanismus, eine Anzahl von durch den Revolvermechanismus bereitgestellte Ritzel (260) und durch die Ritzel (260) getragene Gewindewerkzeuge (261, 262, 263, 264) aufweist.

3. Dreidimensionale Bearbeitungseinrichtung (1) für ein in Längsrichtung groß dimensioniertes Werkstück gemäß Anspruch 2, bei der die Gewindebearbeitungseinheit (250) über einen Mechanismus (280) verfügt, um die bereitgesteilten Ritzel (260) in der Richtung der Z-Achse zu bewegen.

4. Dreidimensionale Bearbeitungseinrichtung (1) für ein in Längsrichtung groß dimensioniertes Werkstück gemäß Anspruch 1 oder Anspruch 2, bei der nach Bearbeiten eines Gewindeleitloches (520) durch die Laserbearbeitungseinheit (210) die Gewindebearbeitungseinheit (250) nachfolgend das Gewindeleitloch (520) einer Gewindebearbeitung unterzieht.

## Revendications

1. Un appareil de traitement tridimensionnel (1) de travail de grande dimension, comprenant :
une base de grande dimension (10) ayant une longueur correspondant à la longueur d'un travail de grande dimension à traiter ;
une unité de traitement (200) disposée substantiellement au niveau d'une partie centrale longitudinale de la base (10) ;
un dispositif d'alimentation en travail frontal (30) disposé pour faire face à un côté de la base (10) par rapport à l'unité de traitement (200) ;
un dispositif d'alimentation en travail arrière (40) disposé pour faire face à l'autre côté de la base (10) par rapport à l'unité de traitement (200) ; et
une pluralité de dispositifs formant mandrin (21,22,23,24) pour saisir le travail et l'envoyer le long de l'axe X qui est un premier axe à l'unité de traitement (200),
**caractérisé en ce que** l'unité de traitement (200) comprend une colonne (110) et une glissière (120) guidée sur la colonne le long d'un axe Y qui est un deuxième axe orthogonal à l'axe X, et une tête de traitement (130) guidée par rapport à la colonne le long d'un axe Z qui est un troisième axe perpendiculaire à un plan formé par l'axe X et l'axe Y ; et
la tête de traitement (130) comprend une unité de traitement laser (210) et une unité de taraudage (250).

2. Un appareil de traitement tridimensionnel (1) de travail de grande dimension selon la revendication 1, dans lequel l'unité de taraudage (250) comprend un mécanisme de tourelle, une pluralité de broches (260) assujetties au mécanisme de tourelle et des outils de taraudage (261,262,263,264) supportées par les broches (260).

3. L'appareil de traitement tridimensionnel (1) de travail de grande dimension selon la revendication 2, dans lequel l'unité de taraudage (250) comporte un mécanisme (280) pour envoyer la broche assujettie (260) dans la direction de l'axe Z.

4. L'appareil de traitement tridimensionnel (1) de travail de grande dimension selon la revendication 1 ou la revendication 2, dans lequel après que l'unité de traitement laser (210) a réalisé un trou de départ de taraudage (520), l'unité de taraudage (250) effectue ensuite un traitement de taraudage sur le trou de départ de taraudage (520).
